# EUROPEAN PATENT APPLICATION

(11) **EP 4 445 744 A1**
(43) Date of publication of application: **16.10.2024**
(21) Application number: 23216757.7
(22) Date of filing: 14.12.2023
(51) Int. Cl.: A23J 1/00, A23J 3/14, A23J 3/18, A23J 3/30, A23J 3/34, C12F 3/06

(54) **METHOD FOR EXTRACTING PROTEIN CONCENTRATE, PROTEIN MEAL, AND BARLEY OIL FROM WET BREWERS' GRAINS**

(30) Priority: 21.12.2022 EP 22215475
(71) Applicant: Citerco Partners LP, D02XT91 Dublin (IE)
(72) Inventor: SKVORTCOV, Igor, 76228 Karlsruhe (DE); NAZAROVA, Ekaterina, 76227 Karlsruhe (DE)
(74) Representative: Jeck, Jonathan

(57) **Abstract**

The invention relates to a method for producing protein concentrate, protein meal, barley meal and, preferentially, barley oil from brewers' grains.

## Description

The innovation relates to a method for extracting protein concentrate, protein meal, and barley oil from wet brewers' grains, particularly the processing of brewery waste.

The innovation group refers to the food industry. It enables a high-efficiency processing of the main waste of the brewing industry, the brewers' grains, to extract three main products. These are protein concentrate, protein meal, and barley oil. Protein products are often used in the food industry to enrich baked goods, meat products, and dairy products with protein. Barley oil is extremely effective when used in the perfume and cosmetics industry.

In the brewing industry, a large amount of waste is produced during beer production. This consists of the remnants of the grain husk and the water-insoluble food portion of the grain, namely the protein- and fat-rich brewers' grains. Among all secondary raw materials of the brewing industry, the brewers' grains are of greatest interest for processing. They are produced in large quantities. On average, 1,300 kg of brewers' grains are produced per 1,000 kg of barley malt.

Brewers' grains are obtained in the final phase of beer mash filtration after the saccharification of barley malt according to beer production technology. Brewers' grains with a moisture content of 85% contain at least 15% dry matter in their composition. This mainly consists of protein, fiber, and fats. Every year, the breweries of the world produce tens of millions of tons of brewers' grains. Most of this is used as animal feed. A portion of the brewers' grains is recycled, causing considerable environmental damage.

Currently, native brewers' grains are not used on a large scale because it is difficult to transport and store them. Fermentation processes begin in the brewers' grains just six hours after they are produced. This makes the brewers' grains unsuitable for further use.

From the state of the art, widespread methods for processing brewers' grains as a feed additive are known. These are based on drying the brewers' grains followed by granulation or grinding (EP0694609A2; WO9822751A1; WO2010053493A1; WO2010117288A1). EP3915391A1 describes a protein concentrate made from brewers' grains that has a maximum moisture content of 7% and contains proteins, fats, fiber, and ash. At the same time, the protein content in such a suspension is at least 50% by weight. The method for producing this protein concentrate is characterized by the fact that the initial brewers' grains are loosened to obtain a homogeneous mass. Mechanical impurities are removed. Then this mass is ground to produce a pasty mass with the addition of water or centrate, so that a pasty mass with a maximum moisture content of 95% is created. This mass is freed from the ground shell, and a suspension is made. The suspension undergoes vibration filtration and is dried to obtain a concentrate with a maximum moisture content of 7% containing proteins, fats, fiber, and ash.

However, these methods do not fully exploit the nutritional potential of the brewers' grains. The indigestible fibers, which make up 80% of the brewers' grains, cannot be separated from the food component of the brewers' grains. In this form, it is possible to use brewers' grains in animal husbandry. In addition, the fats, which are contained in dried brewers' grains at a content of at least 8%, cause disturbances in the digestive system of the animals. These do not allow the requisite amount of brewers' grains to be introduced into the animals' feed. Moreover, drying brewers' grains requires considerable energy consumption. This is a process that is associated with low profit at a low price for the end product.

Methods for further processing of brewery waste are known from the state of the art. In particular, there is a method for processing liquid brewer's grains with a moisture content of 90 - 92%. This involves processing the raw material through a two-stage pressing, in the first stage to a moisture content of 70 - 75% and in the second stage to a moisture content of 40 - 45%. Furthermore, a two-stage drying is provided, in the first stage to a moisture content of 20 - 25% and in the second stage to a moisture content of 10% while obtaining a dry feed additive (RU2215426).

A disadvantage of this method is that a considerable amount of protein is removed from the composition of the concentrate during the pressing of the raw material. Additional concentrate processing capacities are therefore required for its cleaning. In addition, the end product is also rich in insoluble dietary fibers and fat.

A method for producing a protein product from brewer's grains with a protein content of 60% to 90% is known from the state of the art (WO2018136234A1). The method consists of the chemical-thermal treatment of brewer's grains. For this, a mixture of used grain and water is added to the hydrolysis tank while stirring continuously. Glucoamylase is then added. The resulting mixture is heated to a temperature of 30° C to 70° C. The grain particles are ground to an average size of less than 500 microns. Then the pH value of the mixture is adjusted to about 7 to 10.5. An alkaline protease is added to dissolve the protein. The resulting mixture is passed through a sieve with a hole diameter of 5 to 500 µm. This is followed by ultrafiltration using membranes with a pore size of 20 KDA to 40 KDA, followed by nanofiltration.

A disadvantage of the method is the use of sophisticated and expensive equipment as well as a long technology cycle to obtain a protein product of 60 - 105 minutes.

The grinding takes 30 to 60 minutes, and the hydrolysis takes 30 to 45 minutes. Another disadvantage is the use of hazardous substances in the process, i.e. of salt or carbonic acids and alkali. It is also known that all long amino acid chains are destroyed during protein hydrolysis. The protein losses during hydrolysis are up to 70%. In addition, a large amount of water is used in the processing of brewer's grains in a ratio of 8:1 to 11:1 to the brewer's grains. This results in a considerable amount of concentrate, which is a production waste. Additional equipment is therefore required for disposal.

There is also a protein composition obtained from waste grain raw materials in beer production. It contains 40 to 60% proteins, 12 to 18% fats, 2 to 6% fiber materials and 1 to 4% ash in relation to the dry weight (manufacturing method EP0694609A2). The method consists in pressing brewer's grains with a roller mill while simultaneously wet peeling the grain kernels and then separating the resulting product from the husk.

A disadvantage of the method is that during pressing with roller mills, part of the usable components is removed from the brewer's grains, as the brewer's grains are not crushed before pressing and part of the protein is bound in the pressed husk particles. Therefore, there is a loss of protein during the subsequent husk removal. In addition, for more efficient separation of the shell according to a known method, the resulting mixture (liquid protein suspension) is washed with a large amount of water. The resulting suspension is sieved through screens. The washing and sieving process has to be repeated up to five times. This results in a large amount of concentrate, which is a production waste. Additional facilities are therefore also needed to ensure the treatment of the concentrate.

A method for extracting dietary fibers from brewer's grains is known from DE 3644600 A1. The method includes adding hot water to the brewer's grains in a ratio of 1:1. The method also includes intensive mixing and sieving to remove protein, pressing to remove moisture, and drying the obtained fibers, which can be used as dietary fibers.

This process is not aimed at obtaining proteins, but proteins remain as waste. Furthermore, the process requires the addition of extra water. This is withdrawn during the execution of the process or has to be withdrawn as polluted water. Furthermore, the obtained products still contain fat, which impairs their use as animal feed due to the strain on the digestive system.

EP 0 609 548 A2 discloses a method for producing a foodstuff from brewers' grains.

WO 2021/201711 A1 describes a method for producing a protein product from brewers' grains as well as the protein product.

EP 0 050 330 B1 describes a method for obtaining fiber-rich and protein-rich fractions from brewers' grains.

WO 2018/050863 A1 describes a food composition with a high protein content and methods for producing this food composition.

An internet document titled "Sustainable Ingredients" ("https://sustainable-ingredients. com/wp-content/uploads/2023/03/All specification datasheet sustainable_ingredients_gersten_ protein_01.pdf") describes a foodstuff made from barley that contains barley protein.

Thus, all existing brewers' grains treatment methods aim at obtaining protein powders or concentrates. These are characterized by the complexity and duration of protein extraction and a high yield of concentrate, which is a waste product. Additional equipment is required for its disposal.

The state of the art has not disclosed any high-efficiency methods for obtaining end products from brewers' grains in the form of protein concentrate and protein meal. These products are characterized by a high protein content and are widely used as dietary supplements and feed additives. Moreover, none of the known methods obtain barley oil in the process as a separate product.

The claims define the scope of the present disclosure.

In food technology, brewers' grains refer to the residues of brewing malt that are produced during beer production. Brewers' grains contain husks, undissolved portions of barley or wheat malt, and coagulated, insoluble protein.

A method for producing protein concentrate and protein meal from brewers' grains is disclosed. It comprises:
a. providing brewers' grains;
b. grinding the brewers' grains. This step particularly includes grinding the brewers' grains to a grain size of less than 1, 0.5, or 0.1 mm. In the process, nothing is added to the brewers' grains until this grain size is reached;
c. adding aqueous liquid to the ground brewers' grains;
d. obtaining a suspension of ground brewers' grains and aqueous liquid;
e. separating the suspension into an insoluble and a soluble part;
f. processing the insoluble part into a protein meal and the soluble part into a protein concentrate.

The method offers the advantage that no water, no aqueous solution or suspension, no concentrates or any other additives have to be added until the grinding process is completed, so neither liquid water nor steam. In particular, no materials such as solutions, suspensions or concentrates that have arisen downstream in the further process are used during the grinding process. It was found that this could increase the amount of protein obtained from the brewers' grains in the end product compared to methods where liquid water, aqueous solutions or steam are already added at a first grinding step. In particular, the addition of steam requires a more complex construction and incurs additional costs for construction and energy consumption.

The method achieves a more efficient recycling of brewery waste. It also enables the extraction of barley oil using this method. The extraction of barley oil was not provided for in previous methods.

The brewers' grains (brewers' grains or beer grains) used as a starting product can contain 60 - 90 wt. % water. It can be used within 6 hours of its production. The brewers' grains can have a temperature of 0.5 to 90° C upon entering production and/or during grinding. The grinding of the brewers' grains can take place in a grinding device (also referred to as a grinding processor). After grinding, the brewers' grains can have an average particle diameter of 0.01 - 5 mm. After grinding, the brewers' grains can be present as a pasty homogeneous mass (i.e., as slurry). The viscosity of the pasty mass is 500 - 1500 cps (measured at 30° C in a type B viscometer). The grinding device can operate at 5000 - 6000 RPM, particularly at 5600 RPM.

The addition of aqueous liquid, especially water, can take place in a slurry device into which the pasty mass is transferred. The slurry device can be a flow mixer. Aqueous liquid can be added in a ratio of 1 : 0.25 to 1 : 0.75 or 1 : 0.3 to 1 : 0.5 (aqueous liquid : pasty mass). The aqueous liquid can be fresh aqueous liquid and/or aqueous liquid that is recovered later in the process, as described below. The slurry process produces a suspension, i.e., a slurry.

The aqueous liquid/water can be mixed with an acid, especially a food-grade acid, which can particularly convert proteins that are on the verge of insolubility and/or are soluble to a small extent, completely into the solid phase. This allows a clear separation from the soluble proteins and increases the purity of the soluble proteins. This can be done without adjusting the temperature in the filtration process. In principle, a food-grade or human-digestible acid, such as acetic acid or citric acid, can be used. The addition of the acid can take place before or during process step c. The aqueous liquid/water can be mixed with the acid before it is added to the ground brewers' grains. The pH value of the (still) acidic aqueous liquid/water is preferred to be >6, particularly preferred 6.5 or > 6.5.

This range is far outside the pH range of about pH 4, which is generally considered to be the range for precipitation of soluble proteins in the pomace. Surprisingly, however, it was found that a slightly acidic environment favors the removal of generally insoluble or difficult to dissolve proteins from the aqueous portion into the solid phase, thereby increasing the purity of the dissolved proteins.

The slurried mass (also called suspension) can be transferred to a device for separating soluble and insoluble components of the suspended mass, particularly a press device. The transfer can be achieved by a pump, particularly an impeller pump. The press device can be a belt press. This includes pressing means such as rollers and a sieve device as a pressing surface. The pressure in the press device can be 5 - 10 bar. The press device can contain press rollers. The suspension is squeezed out multiple times (2 to 5 times) over these. The sieve can contain 25 - 75 or 30 - 50 openings (i.e., holes) per 1 cm². The soluble portion is squeezed out of the suspension by the pressure. The insoluble portion remains. For example, the soluble portion passes through the sieve, while the insoluble portion remains on the sieve.

The soluble portion has a water content (moisture content) of 90 - 99 wt. % or 93 - 95 wt. %.

The insoluble portion has a water content (moisture content) of 80 - 99 wt. % or 85 - 90 wt. %.

The insoluble part is processed into a protein meal and the soluble part into a protein concentrate. This can be done by removing liquid from the respective portions of the suspension in the next step, e.g., in appropriate devices. The soluble and insoluble parts are transferred into these, separating them from the liquid.

For the insoluble fraction (which is present as a tabular or plate-like mass), this can be done in a single stage, e.g. via a dryer with hollow blades. In this case, the temperature of the medium (e.g. steam or oil) for drying, e.g. the medium in the hollow blades, is 160 - 180° C. This allows for particularly efficient, rapid and gentle drying of the insoluble fraction. The evaporated liquid can be reused in the resuspension step.

The removal of the liquid from the soluble fraction can be done in two stages. The second stage can correspond to the removal of water from the insoluble part.

In the first stage, liquid can be supplied via a (decanter) separator.

The drying product is a food cake with a moisture content of 78 - 80 wt. % water and recycled liquid with a moisture content of 99 - 100 % or 99 - 99.8 wt. % is formed. The recycled liquid can be reused in the resuspension step.

The second stage can correspond to the removal of water from the insoluble part.

At the end of these steps for the removal of liquid, the protein cake (obtained from the soluble fraction) and the plastic masses (obtained from the insoluble fraction) can each have a moisture content of 2 - 3 wt. %.

Therefore, step 1.f may further comprise: removal of the aqueous liquid from the soluble part of the suspension and optional reuse of the removed liquid in step 1.c.

Therefore, step 1.f may further comprise: removal of the aqueous liquid from the insoluble part of the suspension and optional reuse of the removed liquid in step 1.c.

The reuse of water allows for an efficient circular economy and reduces or prevents the addition of external water. This can achieve ecological and economic benefits. Furthermore, it was surprisingly found that the aqueous liquid, which is removed from the soluble part or insoluble part of the suspension, includes both dissolved protein and oil (e.g. fatty acid triglycerides) in relevant amounts. The aforementioned aqueous liquid contains 1 - 5 wt.-%, 1.5 - 3 wt.-% or 1.5 - 2.5 wt.-% protein and 1 - 5 wt.-%, 2 - 4 wt.-% or 2.5 - 3.5 wt.-% (barley) oil. By returning the aqueous liquid, comprising (dissolved) protein and oil, there is an increase in the yield of protein and oil in the final product. The return of the aqueous liquid to the process instead of pure water, as often in the state of the art, allows for an increase in the protein content by 1.0 - 1.5 % and the oil content by 2.0 - 2.5 % in the protein meal and protein concentrate.

Overall, this process provides three benefits: an increase in the protein and oil content in the final product, the saving of a natural resource (water in an amount of 50 - 100 tons per 50 tons of grain) and no need to build a treatment system, the costs of which can reach up to 10 % of the total production costs.

When carrying out the process, the use of a homogenizer can be avoided. A homogenizer (treatment of the feed with at least 90 bar) results in a homogeneous grinding of all components of the pellets, of which at least 70 % are fibers. Homogenizing causes the crushed fibers to be evenly distributed over the main product - protein. Even further sieving does not allow the fibers to be properly separated, as the vibration of the vibrating sieve due to its effect allows fiber particles up to 200 microns to pass. In addition, the moisture content of the separated fiber is at least 80 - 83 %. This means that the fibers not only contain water, but also protein and fat dissolved in water. According to the inventive process, the fibers can be separated from the suspension with a (belt) press. The separation can take place at a pressure of 3 - 5 bar on several rolls of the press, usually 3 or 4 rolls. Therefore, the use of a belt press with 2-6 rolls is particularly preferred, as in this way the dissolved protein can be particularly efficiently separated.

At the same time, the moisture content of the pressed fiber reaches 40 - 45 %, which is twice less than the moisture content of the products separated by sieving. In addition, the pressed moisture contains up to 3 % protein and up to 4 % oil. This increases the total content of protein and fat in the suspension to 48 - 50 % protein and up to 16 - 17 % fat. Thus, the omission of a homogenizing step has the advantage that the obtained concentrate surprisingly contains more protein. The yield of barley oil, which can be obtained with the steps described below, is increased.

The obtained protein cake and the obtained plastic mass can be stored in a moisture-tight container until further use.

The method for extracting fats from brewers' grains can also include:

Performing the method as described above. This includes the step according to claim 1 f. also the extraction of barley oil from the insoluble and soluble parts of the suspension from step e of claim 1) with an organic solvent.

This step has at least two advantages. By separating oil by (ethanol) extraction from the end products, the protein content in the protein concentrate can be increased to 70% (instead of 62 - 63%, if fat is present) and in the protein-rich flour to 25% (instead of 17 - 19%, if it contains fat). In addition, oil is obtained as an additional separate product. It can be used as intended in the cosmetic industry and does not have to be transferred to animal nutrition together with protein.

The organic solvent can be, for example, ethanol. Both the protein cake and the plastic mass can each be placed in a corresponding device for the extraction of barley oil with an organic solvent. For example, organic solvent, especially ethanol, can be added in a ratio of 2.5: 1 - 4: 1 or approximately 3: 1 to the protein cake or the plastic mass.

This results in a miscella (solution of barley oil and organic solvent) by dissolving the barley oil in the organic solvent. The extractor can have a temperature that is 1 - 3° C above the evaporation temperature of the solvent, so for ethanol e.g. 78.3° C. The extractor is sealed off from the atmosphere. Consequently, an overpressure of 2 - 3 bar can occur.

Due to the extractor sealed off from the atmosphere (and the resulting overpressure), the extraction takes place two to three times faster than without overpressure. The step can therefore take about 30 minutes and can be carried out at 69 - 71° C and 2.8 - 3.2 bar. This enables energy-efficient extraction of barley oil.

The miscella can then be removed. The extraction step can be repeated at least 2 or exactly 2 times with fresh, organic solvent. Using a total of 3 extraction steps has proven to be particularly efficient.

Furthermore, the efficiency of the extraction can be further improved by the extractor including a drum with rotating blades or paddles. Subsequently, the barley oil can be separated from the organic solvent. This can be done via a vacuum evaporator.

The separated organic solvent can then be reused if desired. Therefore, the step according to claim 1f can also include: withdrawal of the organic solvent from the solution of solvent and barley oil and optional reuse of the withdrawn organic solvent in the withdrawal step.

The protein cake extracted with organic solvent is described as protein concentrate (derived from the soluble portion of the suspension).

Therefore, a protein concentrate obtainable by the method described above is also disclosed.

The protein concentrate can contain less than 2 wt. % moisture, a particle diameter of less than 0.2 mm, fat, fiber and/or at least 70 wt. % protein.

The protein concentrate, based on its dry weight, may not contain more than 2.8 wt. % fiber, not more than 0.54 wt. % fat, and/or the amino acid content may not be less than 71.7 wt. %.

The protein concentrate comprises a total of 55 - 65 wt. % amino acids.

The plastic mass extracted with organic solvent is described as protein flour (derived from the insoluble portion of the suspension). Therefore, protein flour obtainable by the method described above is also disclosed.

The protein flour can contain less than 2 wt. % moisture, a particle diameter of less than 0.2 mm, fat, fiber and/or at least 25 wt. % protein.

The protein flour, based on its dry weight, may not contain more than 14.9 wt. % fiber, not more than 1,.47 wt. % fat and/or the amino acid content may not be less than 25.24 wt. %.

The protein flour can contain a total of 20 - 30 wt. % amino acids.

Barley oil obtainable by the method described above is also disclosed.

The barley oil can contain 50 - 60 wt. % or 55 - 57 wt. % linoleic acid and 13 - 18 wt. % or 15 - 17 wt. % oleic acid. The barley oil may not contain less than 56.28 wt. % linoleic acid, not less than 16.7 wt. % oleic acid and/or not less than 700 mg/100 ml vitamin E.

The extraction of barley oil from the insoluble and soluble parts of the suspension with an organic solvent may involve the use of an extractor with rotating blades.

The technical result of the claimed invention is to obtain processed beer brewers' grains in the form of a protein concentrate with a protein content of at least 70% in the dry residue, protein meal with a protein content of at least 25% in the dry residue, and barley oil with a vitamin E content of at least 700 mg per 100 ml.

In particular, the technology of processing beer brewers' grains to obtain a protein concentrate with a moisture content of no more than 8% and a protein content of not less than 70%, a protein meal with a moisture content of no more than 8% and a protein content of not less than 25%, a barley oil with a vitamin E content of not less than 690 mg per 100 ml involves subjecting beer brewers' grains in their native form with a moisture content of 60 - 90% to fine grinding with a grinding processor. Then the resulting pulp is mixed with water in a 1:1 ratio. The resulting suspension is subjected to multi-stage pressing using a belt press filter. This separates the suspension into a food fraction with a moisture content of 85 - 95%. This contains in its composition the majority of the protein substances of beer brewers' grains with a protein content of at least 65% in the dry substance and insoluble fibers with a protein content of at least 25% in the dry substance. After that, the suspension is dewatered in a continuous decanter separator and separated into a protein cake with a moisture content of no more than 80% and a food concentrate with a moisture content of not less than 99%. Then the protein cake and the insoluble fibers are subjected to rapid drying in continuous paddle dryers to obtain a protein concentrate with a moisture content of no more than 2% and a protein meal with a moisture content of no more than 2%. Furthermore, fats are removed from the protein concentrate and the protein meal by the method of cyclic 3-stage alcohol extraction with ethanol using a cyclic agitator extractor-evaporator. These make up 8 - 12% of the composition of the concentrate and the meal. After evaporating the remaining ethanol, the protein meal has a protein content of at least 30%. The miscella obtained by the extraction contains 90 - 92% ethanol. This is subjected to ethanol evaporation in a specially developed evaporator. It allows to recover at least 98% of the ethanol and obtain barley oil with an ethanol content of no more than 2%.

All products can be either ready-to-use products or intermediate products from which high-protein mixtures and cosmetic preparations with barley oil can be made. In this case, the technology is completely waste-free, as the concentrate produced by the dewatering through the decanter separator and the moisture evaporated during the drying of intermediate products flow back into the process.

The technical result can be achieved by means of a protein concentrate, protein meal, and barley oil, which are obtained from beer brewers' grains with a moisture content of 80 - 90% and a particle size of up to 10 mm.

In this case, the optimum composition of the protein products is the following amount in the dry residue, wt.% (Table 1).

### Table 1

In this case, the optimum composition of the barley oil is as follows (Table 2).

### Table 2

The technical result can also be achieved by the process of obtaining a protein concentrate, protein meal, and barley oil. This involves subjecting the original raw material, native brewer's grains, to fine grinding in a grinding processor. Then the resulting slurry is diluted with water in a flow mixer in a ratio of 1: 0.3 - 1: 0.5 (slurry/water). The resulting suspension is pumped into a belt press filter using a screw or impeller pump. In this, a multi-stage separation of the liquid fraction of the suspension from the solid part of the suspension takes place. The liquid fraction with a moisture content of 93 - 96% and a protein content of at least 70% is pumped by a metering pump to a continuous decanter separator. The liquid suspension is then dewatered to a cake with a moisture content of 78 - 80%. The food concentrate (moisture separated from the suspension) is returned to the process at the stage of mixing the slurry with water in a flow mixer. At the same time, brewer's grains were ground with a grinding processor from Urschel Laboratories (USA), model Comitrol 1700, with a grinding head rotation frequency of about 5600 rpm, motor power 29 kW, 3-phase network 50 Hz. In this case, a multi-stage separation of the liquid fraction of the suspension from the solid part of the suspension took place on a belt press from T.C. Environmental Inc. (China), model DNY 2.0, press belt width 2000 mm, motor power 3.2 kW, 3-phase network 50 Hz. At the same time, the protein suspension was dewatered in a continuous decanter separator from KOSUN (China), model DC450-1900, with a centrifugation speed of 3400 rpm, motor power 22 kW, 3-phase network 50 Hz.

Preferably, the grains can be ground at a rotation speed of up to 5600 rpm and more without suffering the disadvantages of excessive grain heating.

The protein cake obtained with the continuous decanter separator is further dried in the paddle dryer from ZHENXING (China) to a moisture content of 2% and transferred to the storage container for protein concentrate. The moisture evaporated from the suspension is condensed in a storage container and fed to the process in a flow mixer.

The solid part of the suspension obtained after the belt press with a moisture content of no more than 60% and a protein content of no less than 25% is further dehydrated in a paddle dryer to a moisture content of 2%. It is then transferred to a storage container for protein meal. The moisture evaporated from the suspension is condensed in a storage container and fed to the process in a flow mixer.

In this case, the protein cake and the solid part of the suspension were dried in a paddle dryer from Changzhou Haomai Drying Engineering Co. (China), model KJG-70, with a paddle rate of 0.4 - 10 rpm, motor power 2.2 kW and 3-phase network 50 Hz.

The same technical result can be achieved by extracting fat from protein concentrate and protein meal (defatted products) by continuous extraction of a dry product with a moisture content of no more than 2% in ethanol. The extraction is carried out in a paddle extractor in two stages:
Stage 1 - Addition of the dry product and ethanol to the extractor.
   The ratio of the mass of the dry product to the mass of ethanol is 1: 3. The extraction time is 30 minutes at a pressure of 2 bar and a temperature of 80° C. After that, the mixture is allowed to settle in the extractor for 3 hours and then the miscella is drained into the storage container.
Stage 2 - Addition to the extractor of the ethanol mixture remaining after the miscella has been drained.
   The ratio of the mass of the product to the mass of ethanol is 1: 2. The extraction time is 10 minutes at a pressure of 2 bar and a temperature of 80° C. Afterwards, the mixture is allowed to settle in the extractor for 3 hours and then the miscella is drained into a storage tank.

The same technical result can be achieved by subsequently evaporating ethanol from the extracted product directly in the extractor for 3 hours at a temperature of 80° C and a pressure of 0.9 bar. The moisture content after drying is not more than 2%. In addition, the drying of the extracted materials recovers ethanol and returns it to the technical process. The technical result of product defatting can be achieved in the same way for both products, protein concentrate and protein meal. The fat was extracted from the dry products with a moisture content of 2%. The fat-free products were dried using equipment from Zhenxing Drying Equipment Co., Ltd., model Customized GPG7000, with a speed of 0.4 - 30 rpm, motor power 45 kW and 3-phase power supply 50 Hz.

The technical result of recovering ethanol and reintroducing it into the process can also be achieved by evaporating ethanol from miscella in a vacuum evaporator. Evaporating ethanol from miscella also yields pure barley oil with an ethanol content of no more than 2%. The evaporation takes place at a miscella temperature of no more than 80° C and a pressure of 0.9 bar for 3 hours or until the moisture content of the final product reaches 2%. Finished products, protein concentrate and protein meal are stored in storage containers. Ethanol was evaporated from the miscella on our self-developed evaporator with a power of 7 kW and a 3-phase 50 Hz power supply.

The resulting protein products, the protein concentrate and the protein meal, are characterized by a high protein content. They are obtained in an efficient and technically economical process. No recyclable waste is produced. The concentrate and condensate are returned to the process.

The resulting barley oil is characterized by a high vitamin E content and is safe, as edible ethanol is used for extraction.

The invention will now be explained in more detail with reference to the accompanying drawing. It shows:

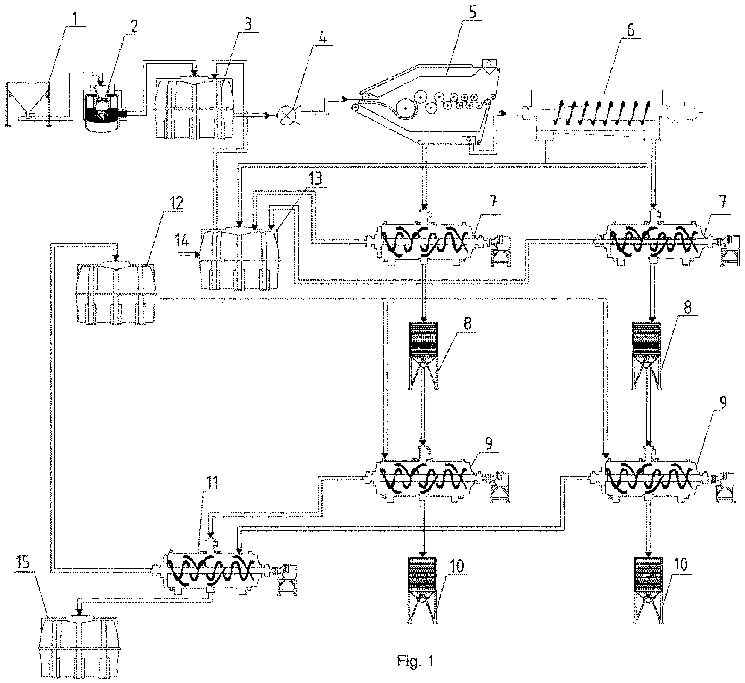

Fig. 1 the schematic of a production line for carrying out the claimed methods.

Where,
1 is the raw material (native brewer's grains)
2 is a grinding processor,
3 is a continuous mixer,
4 is an impeller pump,
5 is a belt press,
6 is a continuous decanter separator,
7 is a paddle dryer,
8 is a storage container for protein concentrate and protein meal,
9 is a paddle extractor/blade stripper,
10 is a storage container for protein concentrate and protein meal,
11 is a vacuum evaporator for ethanol from miscella,
12 is a tank with ethanol,
13 is a tank for circulating water/for water circulation and collecting concentrate and condensate,
14 is a tap water inlet and
15 is barley oil.

### Example 1

In food technology, brewer's grains refer to the residues of brewing malt that occur during beer production. Brewer's grains contain the husks, the undissolved parts of the barley or wheat malt, and the coagulated, insoluble protein.

The following describes the specified invention in more detail. This does not limit the scope of the claim of the specified invention, but shows the possibility of implementing the invention with the achievement of the claimed technical result.

The original brewer's grains with a moisture content of 60 - 90% are processed within 6 hours of receipt (from the time they are produced as waste from beer production). The temperature of the brewer's grains entering production can range from 0.5 to 90 degrees. The brewer's grains 1 (Fig. 1) are loaded into the grinding processor 2 (Fig. 1) manually or mechanically with a uniform flow. This ensures proper grinding of the brewer's grains to a fraction of 0.01 - 0.5 mm. The temperature of the brewer's grains treated in the grinding processor can range from 0.5 to 90 degrees. The moisture content of brewer's grains for processing in a grinding processor can range from 60 - 95%. In the grinding processor 2, the brewer's grains are finely ground to obtain a pasty homogeneous mass, a slurry, with a viscosity in the range of 500 - 1500 cps. The brewer's grains are ground in the grinding processor 2 at a speed of 5600 rpm. This achieves a thick, liquid consistency of the slurry for maximum extraction of the food fraction of the brewer's grains from the raw material in the following processing stage, the belt press 5 (Fig. 1).

After the meal processor 2, the finished slurry flows, preferentially by gravity, into the flow mixer 3 (Fig. 1). In this, water is added to the slurry in a ratio of 1:0.3 - 1:0.5 (slurry/water). Water is supplied to the flow mixer 3 from the storage tank 13 (Fig. 1). This is filled with tap water and watered residues of the processing in the stages of suspension dewatering on a continuous decanter separator 6 (concentrate) and paddle dryers 7 (condensate). After the continuous decanter separator 6, the concentrate is a slightly cloudy, light liquid with a moisture content of 99 - 99.8%, with a temperature of 50 - 70° C and with microscopic inclusions of the food component of brewers' grains, including protein and fat. It is technically not possible to separate these from the water in a continuous decanter separator 6. Approximately 850 - 900 liters of concentrate are produced from one ton of sludge. The condensate after the paddle dryer 7 is a slightly cloudy, light liquid with a moisture content of 99.8 - 99.9%, with a temperature of 70 - 90° C and minor microscopic inclusions of the food component of brewers' grains, including protein and fat. Condensation occurs during the evaporation process from the food cake when drying the cake on a paddle dryer. Approximately 730 - 770 liters of condensate are evaporated from 1 ton of cake. The concentrate and the condensate are a valuable resource that is used in the cycle of technology. It allows to save the tap water consumed by the technology, to increase the production of the end products of the technology by 1.0 - 1.5% and to completely eliminate the disposal of concentrate and condensate. This saves resources that are used for cleaning the concentrate and condensate before discharging into the sewer.

After the flow mixer 3, the suspension is pumped to the belt press 5 (Fig. 1) with the impeller pump 4 (Fig. 1). On the belt press 5, the suspension is spread in an even layer on a press belt with a thickness of 2 - 3 mm. It is then repeatedly pressed out by press rollers with a pressure of 5 - 10 bar. The belt has approximately 30 - 50 holes per 1 cm² with a diameter of 0.01 mm over the whole surface. Through these, the food component of the suspension is pressed into the pallet of the belt press. This suspension is then further transferred into the process. The suspension has a moisture content of 93 - 95% and forms a further basis for the protein concentrate. The insoluble portion of the suspension (husks, barley awns) is retained on the belt and scraped off the belt over the whole belt surface after being repeatedly squeezed with a stationary scraper. This plastic mass is then tipped into the collection trough of the belt press and further added to the process. The plastic mass has a moisture content of 85 - 90%. It forms a further basis for the protein meal.

The food suspension (soluble portion of the suspension) with a moisture content of 93 - 95% is fed to a continuous decanter separator 6 (Fig. 1) by gravity (the use of a dosing pump is possible) after the belt press 5. There it is dewatered in a continuous process to obtain a food cake with a moisture content of 78 - 80% and recycled concentrate with a moisture content of 99 - 99.8%. The suspension is dewatered with the set parameters of the continuous decanter separator 6 as follows:
- Inner drum of the decanter 450 mm;
- Operating speed 3200 rpm;
- Separation factor not less than 3000;
- Power of the main electric motor 22 kW;
- Power of the auxiliary electric motor 7.5 kW.

During dewatering, the cake is continuously transferred to the bottom of the decanter 6. It is then manually or by any automated method (belt or screw conveyor) transferred to the paddle dryer 7 for the cake (Fig. 1). The concentrate continuously flows by gravity through the pipeline into the storage tank 13. There it is constantly mixed with tap water.

The plastic mass (also called tabular mass) obtained on the belt press 5 is then manually or by any automated method (belt or screw conveyor) transferred to the paddle dryer 7 for the tabular mass (Fig. 1).

The paddle dryers 7 for cake and tabular mass are completely identical.

In paddle dryers, the cake or tabular mass is evenly mixed with the transfer of high-temperature hollow paddles of the coolant inside the paddles and also the heating jacket of the dryer through the hollow paddles (The coolant can be hot water with a temperature of 95 - 98° C or steam with a temperature of 140 - 150° C or hot oil with a temperature of 160 - 180° C). When heat is transferred to the drying products (cake or tabular mass), moisture evaporates from the products. The most effective method is the use of hot oil with a temperature of 160 - 180° C as a heat medium. In this case, the heating of the evaporated raw material to the temperature of water evaporation of 100° C is 2 - 3 times faster than when using hot water or steam as a heat medium. The evaporated moisture is condensed in the condenser of the dryer and drained by gravity into the storage tank 13. There it is mixed with tap water and then used in the process.

After the evaporation of the moisture from the cakes and plastic raw materials, dry products with a moisture content of 2 - 3 % enter the storage tanks 8 (Fig. 1). The tanks are completely sealed. They prevent moisture from the ambient air from entering the dried food.

As soon as a sufficient amount of dry product has accumulated in the hopper, the dry products are transferred to the paddle extractors 9 (Fig. 1) using pneumatic conveying systems or another method for transferring dry powdery products.

The volume of the filling of the extractor 9 with the dry product is 50 % of the total volume of the extractor 9. After filling the extractor 9 with the dry product, the product is mixed in the extractor. This begins with the addition of ethanol from the ethanol tank 12 (Fig. 1). Ethanol is added in an amount of 3 liters of ethanol per 1 kg of dry product. When adding ethanol and mixing a dry product mixture with ethanol at a speed of 0.5 - 1.5 rpm, the product fat begins to dissolve in ethanol. This creates a miscella, a mixture of ethanol and fats. To accelerate the extraction, the mixture of the extractor 9 is heated through the heating jacket of the extractor to a mixture temperature of 80° C. Since the evaporation temperature of ethanol is 78.3° C, an overpressure is created in the extractor at 80° C due to the boiling of the ethanol. The boiling ends at a pressure of 2 - 3 bar. At an elevated temperature of the extracted mixture, the extraction is 2 - 3 times more efficient than at normal atmospheric pressure and does not last longer than 30 minutes. Then the stirring in the extractor 9 is stopped. The heating medium is no longer supplied. During the following 3 hours, the mixture cools down to 70° C and settles. The solid fractions of the mixture settle in the lower part of the extractor 9, while the miscella is in the upper part. After that, the miscella is drained into the vacuum evaporator 11 (Fig. 1) to separate the barley oil 15 from the ethanol. Then, after emptying the miscella into the extractor 9, another extraction cycle is carried out at a temperature of 80° C for 10 minutes. Another settling cycle takes place for three hours. After that, the miscella is drained into the vacuum evaporator 11. Table 3 shows the fat content of the product at each stage of extraction.

### Table 3

Table 3 shows that the fat content in the product after 2 stages of extraction drops from 11.8 % to 0.6 % and further extraction is not advisable.

After the fat extraction, the product remaining in the extractor 9 is dried at a temperature of 80° C within 2 - 3 hours to a moisture content of 2 %. The evaporated ethanol is cooled in the extraction condenser 9 and returned to the ethanol tank 12.

After the miscella is drained from the extractor 9 into the vacuum evaporator 11, the miscella is heated to a temperature of 80° C and a pressure of 0.9 bar. At the same time, the miscella is actively boiled to remove the ethanol. The ethanol is evaporated for 1 - 2 hours, cooled in the condenser of the evaporator 11, and transferred to the ethanol tank 12. In this way, the ethanol is almost completely recovered during the extraction. The loss of ethanol is no more than 2% per full ethanol turnover in the process. This allows us to protect the environment from harmful emissions and achieve high economic efficiency of the process.

The dried product in the extractor 9 (protein concentrate and protein meal) is transferred for further use to storage containers for protein concentrate and protein meal 10 (Fig. 1).

The analysis in Table 4 and Table 5 shows that the end products of the proposed technology can be characterized by a high nutritional value and a rich amino acid composition, which is identical to the amino acid composition of brewers' grains.

### Table 4

### Table 5

The analysis in Table 6 shows the content of the most useful fatty acids: Linoleic acid - 56.28%, Oleic acid - 16.70%.

### Table 6

The total processing time for 1000 kg of brewers' grains is 8 hours. The settling process after extraction takes the longest time, namely 6 hours.

Thus, the protein concentrate and protein meal obtained by the claimed process are characterized by a high protein content as well as a low fat and fiber content.

### Example 2

100 kg of brewers' grains (moisture content 85% and a temperature of 68° C) are passed through a grinding processor with a capacity of 4 tons of grain per hour. The grinding duration of a batch of 100 kg is 90 - 100 seconds. Of the finely ground brewers' grains obtained at the mill's output, 90% have a grain size of 0.5 - 1.0 mm. The remaining 10% have sizes from 0.01 to 0.5 mm. Next, the pulp is mixed with water in a continuous mixer. Water is added at a rate of 1:0.5, depending on the moisture content of the initial brewers' grains. The total volume of additional water is 50 liters. The mixing of the pellets with water in a continuous mixer takes 20 seconds, the water has a temperature of 22° C. After mixing with water, the resulting homogeneous mash has a moisture content of 90% and a temperature of 47° C.

### Example 3

100 kg of brewers' grains (moisture content 88% and a temperature of 72° C) are passed through a grinding processor with a capacity of 4 tons of grain per hour. The grinding duration of a batch of 100 kg is 90 - 100 seconds. Of the finely ground brewers' grains obtained at the mill's output, 92% have a grain size of 0.45 - 1.0 mm. The remaining 8% have dimensions from 0.01 to 0.45 mm.

Next, the pulp is mixed with water in a continuous mixer (3). Water is added at a ratio of 1:0.4. Depending on the moisture content of the initial brewers' grains, the total volume of additional water is 30 liters. The mixing of the pellets with water in the continuous mixer takes 20 seconds. The water has a temperature of 23° C. After mixing with water, the homogeneous mash has a moisture content of 91% and a temperature of 56° C.

The following aspects are particularly disclosed:
Protein concentrate, protein meal, and barley oil obtained from brewers' grains, characterized in that the protein concentrate and protein meal have a moisture content of no more than 2% and a particle size of no more than 0.2 mm and contain proteins, fats, and fibers. The protein content in the protein concentrate is at least 70% in the protein meal and at least 25 wt.% in the dry residue. Barley oil has a vitamin E content of at least 700 mg/100 ml.
Protein concentrate according to aspect I, characterized in that the quantitative content of the components in the dry residue (in wt.%) is: fiber no more than 2.8; fat no more than 0.54, while the amino acid content is not less than 71.7.
Protein meal according to aspect I, characterized in that the quantitative content of the components in the dry residue (in wt.%) is: fiber no more than 14.9; fat no more than 1.47, while the amino acid content is not less than 25.24.
Barley oil according to aspect I, characterized in that the quantitative content of the components in the barley oil (in wt.%) is: linoleic acid not less than 56.28%, oleic acid not less than 16.7% and the content of vitamin E not less than 700 mg/100 ml.
Method for obtaining protein concentrate, protein meal, and barley oil according to aspect 1, characterized in that the initial brewers' grains is ground on a grinding processor. Then water is added up to a moisture content of no more than 93%. Then the resulting mass is divided into two products to obtain end products: protein concentrate, which contains protein with at least 70% on the dry mass, and protein meal with at least 25% protein on the dry mass.
Method for obtaining barley oil according to aspect I, characterized in that fats are extracted from the two end products, barley concentrate and barley meal, to obtain barley oil with a vitamin E content of at least 700 mg/100 ml.
Method according to aspect I, characterized in that the by-products of the proposed technology, concentrate and condensate, are fully returned to the process of producing products from brewers' grains.
Method according to aspect I, characterized in that an extractor with rotating blades is used in the extraction of fats from the finished derivative products from brewers' grains, barley concentrate and barley meal, which allows the fat extraction to be carried out in an accelerated and efficient manner.
Method according to aspect I, characterized in that an extractor is used in the extraction of fats from the finished derivative products brewers' grains, barley concentrate and barley meal, which offers the possibility to dry the product after extraction without overloading the product.
Method according to aspect 1, characterized in that a method for complete ethanol recovery is used in the extraction of fats from the finished derivative products brewers' grains, barley concentrate and barley flour.

## Claims

1. Method for producing foodstuffs, in particular protein concentrate and protein meal, from brewers' grains, comprising:
a. providing brewers' grains;
b. grinding the brewers' grains. This step particularly includes grinding the brewers' grains to a grain size of less than 1 mm. In the process, nothing is added to the brewers' grains until this grain size is reached;
c. adding aqueous liquid to the ground brewers' grains;
d. obtaining a suspension of ground brewers' grains and aqueous liquid;
e. separating the suspension into an insoluble and a soluble part;
f. processing the insoluble part into a protein meal and the soluble part into a protein concentrate, whereby the protein concentrate contains less than 2 wt. % liquid and at least 70 wt. % protein.

2. Method according to claim 1,
wherein step 1.f further comprises: withdrawal of the aqueous liquid from the soluble part of the suspension and optional reuse of the withdrawn liquid in step 1.c.

3. Method according to one of the preceding claims,
wherein step 1.f further comprises: withdrawal of the aqueous liquid from the insoluble part of the suspension and optional reuse of the withdrawn liquid in step 1.c.

4. Method according to one of the preceding claims,
wherein the method is realized free of homogenization steps.

5. Protein concentrate,
wherein the protein concentrate contains less than 2 wt. % liquid, a particle diameter of less than 0.2 mm, fat, fiber and/or at least 70 wt. % protein, and
wherein the protein concentrate, based on its dry weight, does not contain more than 2.8 wt. % fibers, not more than 0.54 wt. % fat and/or the amino acid content is not less than 71.7 wt. %.

6. Protein meal,
wherein the protein meal contains less than 2 wt. % liquid, a particle diameter of less than 0.2 mm, fat, fiber and/or at least 25 wt. % protein, and
wherein the protein meal, based on its dry weight, does not contain more than 14.9 wt. % fibers, not more than 1.47 wt. % fat and/or the amino acid content is not less than 25.24 wt. %.

7. Barley oil,
wherein the barley oil contains not less than 56.28 wt. % linoleic acid, not less than 16.7 wt. % oleic acid and/or not less than 700 mg/100 ml vitamin E.
